# FASCICULE DE BREVET EUROPEEN

(11) **EP 3 506 566 B1**
(45) Date de publication et mention de la délivrance du brevet: **27.10.2021**
(21) Numéro de dépôt: 18215978.0
(22) Date de dépôt: 31.12.2018
(51) Int. Cl.: H04L 12/26, H04L 12/24

(54) **PROCÉDÉ ET DISPOSITIF POUR LA SURVEILLANCE À DISTANCE D'OBJETS CONNECTÉS MULTIPLES**
VERFAHREN UND VORRICHTUNG ZUR FERNÜBERWACHUNG VON MEHRFACH VERBUNDENEN OBJEKTEN
METHOD AND DEVICE FOR REMOTE MONITORING OF MULTIPLE CONNECTED OBJECTS

(30) Priorité: 30.12.2017 FR 1763423
(43) Date de publication de la demande: 03.07.2019
(73) Titulaire: BULL SAS, 78340 Les Clayes sous Bois (FR)
(72) Inventeur: DEMEILLIEZ, Bruno, 38380 Saint Laurent du Pont (FR); GERMAIN, Christophe, 38100 Grenoble (FR); ROCHETTE, Florent, 38170 Seyssinet Pariset (FR)
(74) Mandataire: IPAZ

(56) Documents cités:
- US-A1- 2003 046 035
- US-A1- 2010 127 880
- US-A1- 2010 199 188

## Description

La présente invention concerne le domaine de la surveillance informatique et, en particulier, de la surveillance à distance de multiples objets connectés de types divers. L'invention porte notamment sur un dispositif et un procédé mis en œuvre par ordinateur, configurés pour réaliser une surveillance automatique et autonome d'une multitude d'objets connectés de types divers et si nécessaire déclenchement des actions préventives.

### [Art antérieur]

En général, la surveillance des objets connectés est réalisée de manière centralisée ou distribuée par le constructeur d'un objet connecté, au moyen d'un système informatique spécifique dédié à cet objet connecté en particulier, sur lequel par ailleurs un logiciel dédié est installé. Ces systèmes informatiques, créés par les constructeurs, sont propriétaires et leur l'usage est généralement réservé aux objets connectés du constructeur. La création, le déploiement et la maintenance de tels infrastructures et systèmes informatiques est complexe et onéreuse. Ainsi, leur utilisation est réservée aux constructeurs qui disposent des moyens techniques et financiers idoines.

Ainsi, il est fréquent que des constructeurs qui commercialisent des objets connectés ne soient pas en mesure de fournir et de maintenir des systèmes informatiques appropriés, permettant un contrôle efficace de leurs objets connectés. Ces constructeurs pourraient bénéficier d'une solution globale permettant de surveiller leurs objets connectés. De plus, un administrateur d'objets connectés provenant d'une pluralité de constructeurs pourrait bénéficier d'un tel système permettant d'unifier la surveillance d'objets connectés. En outre, une difficulté additionnelle se pose lorsque ces objets connectés sont placés derrière un pare-feu tiers, tel que par exemple le pare-feu intégré à un modem (ou à une "box") internet. En effet, pour parvenir à surveiller de multiples types d'objets connectés, il faudrait configurer de multiples permissions ou exceptions auprès du pare-feu.

Le document de l'art antérieur US2010127880 décrit un service de surveillance de la température dans lequel des unités de surveillance à distance sont distribuées aux clients pour des installations de surveillance comme souhaité, dans lequel des dispositifs de température peuvent être enregistrés via un site Web utilisant internet.

Un autre document, le document de l'art antérieur US2010199188 décrit un système de surveillance de capteurs qui fournissent des notifications ou des changements d'état en fonction de conditions spécifiques, et peut fonctionner individuellement ou collectivement dans des systèmes séparés qui fournissent des points de notification uniques pour plusieurs capteurs ou demandent le transfert d'un message particulier.

Encore un autre document de l'art antérieur US2003046035 décrit un système redondant pour surveiller l'activité du marché, dans lequel des alertes sont générées en réponse à la détection de conditions à partir de messages entrants reçus pour des événements de marché configurés pour resynchroniser un état de données avec le système de sauvegarde.

Or, pour l'heure, l'art antérieur ne permet pas de pallier les problèmes techniques ainsi soulevés. En effet, les dispositifs et procédés proposés, ne sont pas en mesure de permettre la surveillance automatisée et autonome d'une multitude d'objets connectés différents et pouvant être placés derrières un pare-feu. En outre, aucune solution ne permet pas de surveiller aisément des objets connectés au réseau via une adresse IP non fixe ou connectés de manière discontinue.

Ainsi, il existe un besoin pour de nouveaux procédés ou systèmes pour la surveillance à distance d'objets connectés de types et aux fonctions multiples et/ou qui seraient derrière un pare-feu.

### [Problème technique]

L'invention a donc pour but de remédier aux inconvénients de l'art antérieur. En particulier, l'invention a pour but de proposer un procédé mis en œuvre par ordinateur pour permettre la surveillance automatisée et autonome d'une pluralité d'objet connectés pouvant provenir de différents constructeurs susceptibles de ne pouvoir être surveillés en commun, du fait de leur diversité de types et de fonctions. L'invention a en outre pour but de proposer un dispositif configuré pour mettre en œuvre une surveillance d'objets connectés, provenant d'opérateurs divers et susceptibles de ne pouvoir être surveillés en commun, du fait de leur diversité de types et de fonctions.

En outre, l'invention à également pour but de proposer un procédé capable de déployer une telle surveillance d'objets connectés de types et aux fonctions multiples quand bien même ces objets seraient protégés par un pare-feu, et ce sans avoir à configurer de multiples permissions ou exceptions auprès du pare-feu, notamment en éliminant le besoin d'une communication descendante du système de surveillance vers l'objet connecté.

### [Brève description de l'invention]

L'invention concerne un procédé selon la revendication 1, un appareil selon la revendication 12 et un produit programme d'ordinateur selon la revendication 13. D'autres modes de réalisation de l'invention sont définis par les revendications dépendantes.

Le procédé selon l'invention permet, à partir d'un traitement approprié de messages de statut, de mettre en œuvre une surveillance automatique d'une pluralité d'objets connectés. En outre, via un module d'alertes, il permet de réaliser des actions en fonction des statuts des objets connectés tels que la génération de messages d'alertes. Cela permet à un constructeur ou à un administrateur d'anticiper des dysfonctionnements.

Ce procédé permet de mettre en place une remontée automatique d'informations et cela malgré un parc hétérogène notamment au regard de l'origine des objets connectés ou même de la version de logiciel embarqué et donc de messages de statut différents. Ainsi, un administrateur d'une multitude d'objets connecté peut mettre en place une automatisation de la surveillance et des interventions idoine. Cela peut permettre notamment l'organisation d'un service après-vente à partir de collecte de données de statut des objets connectés. En outre, l'invention peut être utile pour la mise en œuvre d'un service de maintenance préventive ou même d'une maintenance prédictive dont le but est de planifié au bon moment l'intervention afin de réduire les coûts associés à un arrêt de service ou à un changement de pièces trop tôt par exemple

### Selon d'autres caractéristiques optionnelles du procédé :

- Il comprend une étape préalable de configuration du référentiel objets, ladite étape comportant l'enregistrement sur ledit référentiel objets d'un paramètre d'objet comprenant un paramètre de vérification des messages de statut, et lors de l'étape d'extraction, les valeurs de paramètres de statut sont extraites en fonction dudit paramètre de vérification des messages de statut. Cela permet avantageusement de déterminer une fonction d'analyse syntaxique précise pour un message de statut donné, afin de permettre la reconnaissance de données d'une part et l'extraction de tout ou partie desdites données d'autre part en fonction du paramètre de vérification du message de statut.
- il comprend en outre une étape préalable d'émission d'une requête, ladite requête comportant une instruction de requête du statut de l'objet connecté et ladite requête étant émise auprès des objets connectés appartenant au parc d'objets connectés. De façon préférée, la requête est émise seulement vers les objets connectés accessibles *via* le réseau en direct et en continue.
- l'acquisition se fait auprès d'un serveur de dépôt auquel l'objet connecté a envoyé un message de statut. Ainsi, le procédé selon l'invention est capable d'exercer une surveillance même lorsque l'objet connecté n'est pas accessible directement comme cela peut être le cas par exemple lorsque l'objet connecté se trouve derrière un pare-feu ou dispose d'une connexion intermittente à internet.
- il comprend une étape préalable de configuration du référentiel objets, ladite étape comportant l'enregistrement sur ledit référentiel objets, d'au moins l'un des paramètres d'objet suivants :
   - Paramètre de fréquence de mise à jour du statut,
   - Paramètre d'accessibilité de l'objet connecté,
   - Paramètre de communication avec l'objet connecté,
   - Paramètre de vérification des messages de statut,
   - des valeurs de seuils prédéterminés d'alerte,
   - des valeurs de criticité de paramètres de statut, et/ou
   - Paramètre d'actions en fonction de dépassement des seuils prédéterminés d'alerte.

L'enregistrement sur le référentiel d'objet est réalisé de préférence pour chacun des objets connectés listés dans ledit référentiel objets,
- lors de l'étape d'extraction, les valeurs d'au moins trois paramètres de statut sont extraites à partir dudit message de statut. En effet, l'invention permet la surveillance large de divers type d'objets connectés mais également sur une pluralité de paramètres.
- les paramètres de statut dont les valeurs extraites sont sélectionnés parmi : état de fonctionnement de l'objet, version logicielle, version hardware, espace disque disponible, jours de fonctionnement, état de la batterie, date d'émission du message de statut et état de fonctionnement de modules de l'objet (e.g. module d'acquisition d'image). La version logicielle peut être utile pour définir le traitement du message car le parc d'objets connectés peut être un parc hétérogène comportant des objets connectés dont le message de statut varie en fonction de la date de conception. La date d'émission du message de statut peut être utile pour détecter un éventuel problème de connectivité des objets utilisant le serveur de dépôt.
- il comprend en outre une étape de génération d'une valeur d'état de fonctionnement de l'objet connecté, ladite valeur d'état de fonctionnement étant basée sur les valeurs des paramètres de statut et les valeurs de seuil prédéterminé d'alerte. Une telle valeur d'état de fonctionnement permet d'obtenir une vision synthétique de l'état de fonctionnement de l'objet connecté. De façon avantageuse, la valeur d'état de fonctionnement est en outre basée sur des valeurs de criticité des paramètres de statut. Cela permet d'inclure une pondération entre les différents paramètres qui ne présentent pas la même importance.
- les étapes sont répétées pour tous les objets connectés listés dans le référentiel objets.
- il comprend en outre la génération d'un rapport comportant les valeurs d'état de fonctionnement de tous les objets connectés listés dans le référentiel objets.

Selon un autre aspect, l'invention porte sur un dispositif pour la surveillance d'objets connectés appartenant à un parc d'objets connectés sous surveillance, ledit dispositif comportant :
- un référentiel objets configuré pour lister les objets connectés à surveiller,
- un module de communication configuré acquérir un message de statut émis par un objet connecté, ledit objet connecté étant inscrit dans le référentiel objets,
- un module de traitement de message, configuré pour extraire des valeurs de paramètres de statut à partir dudit message de statut,
- un module de vérification, configuré pour comparer des valeurs de paramètres de statut à des valeurs de seuils prédéterminés d'alerte, et
- un module d'alerte, configuré pour générer un message d'alerte en fonction de ladite comparaison réalisée.

Un troisième aspect de l'invention concerne un programme d'ordinateur ainsi qu'un produit programme d'ordinateur et un support de stockage pour de tels programme et produit, permettant la mise en œuvre d'un procédé selon le premier aspect de l'invention, lorsque le programme est stocké dans une mémoire d'un dispositif de surveillance et exécuté par un processeur d'un tel dispositif.

En particulier l'invention concerne un programme d'ordinateur ainsi qu'un produit programme d'ordinateur comportant des instructions de programme, qui, lorsqu'elles sont préalablement enregistrées dans une mémoire d'un dispositif de surveillance, par exemple d'un dispositif de surveillance selon l'invention, provoquent la mise en œuvre d'un procédé pour la surveillance d'objets connectés selon l'invention. En outre, selon un autre aspect, l'invention concerne un support de stockage tangible, par exemple lisible par le dispositif de surveillance selon l'invention, sur lequel est stocké de manière non-transitoire un produit ou programme selon l'invention.

D'autres avantages et caractéristiques de l'invention apparaitront à la lecture de la description suivante donnée à titre d'exemple illustratif et non limitatif, en référence aux Figures annexées qui représentent :
- Figure 1, une représentation schématique d'un procédé de surveillance d'objets connectés selon l'invention. Les étapes encadrées par des pointillés sont facultatives ;
- Figure 2, une représentation schématique d'un mode de réalisation du procédé selon l'invention ;
- Figure 3, une illustration du dispositif de surveillance selon l'invention et de moyens participant à la mise en œuvre de l'invention.

### [Description de l'inventionl

Dans la suite de la description, un «objet connecté » est un objet électronique connecté sans fil à un réseau et pouvant partager des informations avec un ordinateur, une tablette électronique, un smartphone ou tout autre appareil électronique.

Par « seuil prédéterminé d'alerte », on entend au sens de l'invention une valeur par exemple minimale ou maximale associée à chaque paramètre de statut et utilisée comme déclencheur de la génération d'un message d'alerte, d'une planification d'intervention à réaliser avant un arrêt de l'objet connecté ou plus généralement d'une action dans le cadre de l'invention. Par exemple, cela correspond aux limites acceptables de charge d'une batterie ou encore un état de « bon fonctionnement » pour un appareil d'acquisition d'images. Ces valeurs limites peuvent être réelles ou hypothétiques et correspondent généralement un niveau à partir duquel des dysfonctionnements peuvent survenir et ayant pour conséquence un arrêt, à plus ou moins long terme, de l'objet connecté ou bien à tout le moins des baisses de qualités de fonctionnement.

Le terme « dysfonctionnement » au sens de l'invention correspond à la survenue d'un incident matériel ou fonctionnel (e.g. débit d'une vanne) sur l'objet connecté sous surveillance.

L'expression « interface homme-machine » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans la suite de la description, les mêmes références sont utilisées pour désigner les mêmes éléments.

Considéré comme la troisième révolution de l'internet, l'internet des objets désigne l'ensemble des objets connectés à internet. Les usages sont très variés et peuvent aller du domaine de l'e-santé à celui de la domotique en passant par les téléphones mobiles. Les objets connectés envahissent un plus chaque jour notre quotidien. On comptait 4,9 milliards d'objets en 2015. On parle de 25 à 150 milliards d'objets connectés en 2025. A cette croissance exponentielle, s'ajoute une très grande diversité des domaines d'applications : santé, transport, commerce, domotique... Le nombre et la diversité constituent un vrai défi technique pour la mise en place d'une surveillance systématique de l'ensemble de ces objets. Les inventeurs proposent une solution permettant de répondre à ces enjeux en proposant un mécanisme générique pouvant donc s'adapter à la diversité des objets connectés mais également un mécanisme permettant d'automatiser la surveillance afin de pouvoir couvrir l'ensemble des objets connectés déployés, qu'ils soient ou non directement accessibles.

Ainsi, les inventeurs ont développé un nouveau procédé 200 pour la surveillance d'objets connectés 11, 12, 13, 14, appartenant à un parc 10 d'objets connectés sous surveillance, pouvant être mis en œuvre sur un dispositif informatique 100.

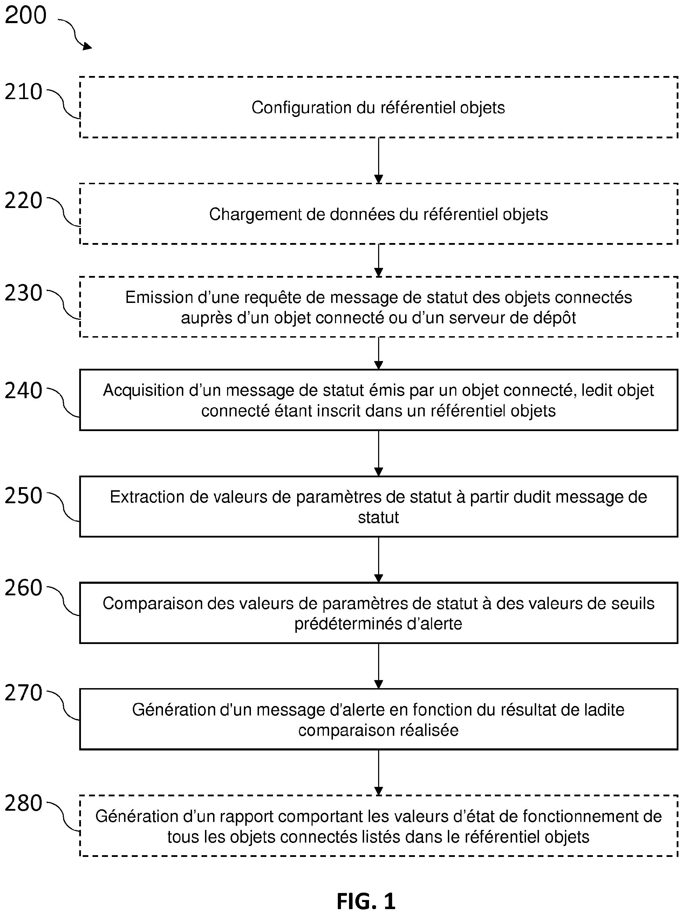

Ce procédé permet avantageusement d'adapter à n'importe quel objet connecté. La **figure** 1 illustre schématiquement un procédé de surveillance d'objets connectés selon l'invention.

Comme cela est présenté dans **la** **figure 1****,** le procédé de planification selon l'invention comprend une **étape facultative 210 de configuration d'un référentiel objets du dispositif informatique 100.** Cette étape peut être réalisée partiellement ou complétement par **un module de modélisation 10** qui sera présenté par la suite.

Cette étape de configuration permet notamment de donner les moyens au procédé de s'adapter à la diversité des objets connectés à surveiller. Elle comporte l'enregistrement sur le référentiel objets 110 d'un identifiant unique pour chaque objet connecté 11,12,13,14 du parc 10 d'objets connectés sous surveillance. Cet identifiant unique peut par exemple correspondre au numéro de série de l'objet connecté ou bien à son adresse MAC (« Media Access Control » en terminologie anglo-saxonne).

Cette étape de configuration 210 comporte avantageusement l'enregistrement sur ledit référentiel objets, de préférence pour chacun des objets connectés listés dans le référentiel objets 110, d'au moins l'un des paramètres d'objet suivants :
- Paramètre de fréquence de mise à jour du statut, permettant de définir la fréquence de vérification du message statut pour chacun des objets de façon à limiter l'encombrement du réseau ;
- Paramètre d'accessibilité de l'objet connecté, permettant de déterminer si une accession directe est possible ou bien si l'utilisation d'un serveur de dépôt est nécessaire. En outre, il peut permettre de détailler les protocoles d'accès à l'objet connecté (e.g. http, ssh, ftp) et comporte par exemple une adresse IP d'objet connecté pour les connections directes ou une adresse IP de proxy et un identifiant pour les objets inaccessibles ;
- Paramètre de communication avec l'objet connecté, permettant de spécifier les formats de construction des requêtes. Les formats peuvent par exemple être sélectionné parmi JSON, XML et YAML ;
- Paramètre de vérification des messages de statut, permettant d'extraire les valeurs de paramètre de statut souhaitée. Cette extraction peut par exemple nécessiter la mise en œuvre de fonctions d'analyse syntaxique (« parsing » en terminologie anglo-saxonne) et se baser sur des langages de type DTD (« Document Type Définition » en terminologie anglo-saxonne), DTD SGML (« Standard Generalized Markup Language » en terminologie anglo-saxonne), XML Schema (« Extensible Markup Language » en terminologie anglo-saxonne) ou Relax NG (« Regular Language for XML Next Génération » en terminologie anglo-saxonne) ;
- Des valeurs de seuils prédéterminés d'alerte, permettant de définir les valeurs normales de fonctionnement et pouvant être utilisé comme déclencheur d'un message d'alerte ;
- Des valeurs prédéterminées de criticité de paramètres, permettant de définir l'importance des paramètres les uns par rapport aux autres et ainsi établir une pondération entre une alerte pour un paramètre par rapport à une alerte pour un autre paramètre présentant par exemple une valeur de criticité plus faible ;
- Paramètres d'actions en fonction de dépassement des seuils prédéterminés d'alerte permettant de définir un comportement du dispositif ou du procédé en cas de dépassement d'un prédéterminé d'alerte.

Le référentiel objets 110 peut par exemple être un fichier plat de configuration par exemple au format .txt, .csv, .dsv ou .ini ou bien une base de données.

Comme cela est présenté dans la **figure 1**, le procédé de planification selon l'invention peut comprendre une étape préalable de **chargement 220 de données du référentiel objets 110.** Ce chargement de données correspond à l'accès à au moins l'un des paramètres d'objet enregistrés sur le référentiel objets 110.

Comme cela est présenté dans la figure 1, le procédé de planification selon l'invention peut comprendre une **étape préalable d'émission 230 d'une requête** et plus particulièrement l'émission d'une requête de message de statut des objets connectés auprès d'un objet connecté ou d'un serveur de dépôt. La requête peut notamment comporter une instruction de requête du message de statut de l'objet connecté 11. Cette étape peut être réalisée partiellement ou complètement par **le module de communication 140** qui sera présenté par la suite.

La requête peut être faite en n'importe quel format lisible par l'objet connecté concerné comme par exemple au format HTTP, SSH ou FTP. De façon préférée, la requête est une requête au format HTTP car il s'agit d'un protocole généralement laissé ouvert sur les dispositifs de sécurité.

En outre, l'émission d'une requête dans le cadre de l'invention peut être réalisée par tout module capable d'émettre des requêtes à un format lisible par l'objet connecté concerné. L'émission d'une requête dans le cadre de l'invention peut être réalisée par une application développée à façon, codée en java (marque déposée) par exemple, pour émettre des requêtes et traiter les réponses des objets connectés.

Cette requête est émise auprès des objets connectés appartenant au parc d'objets connectés. De façon préférée, elle est émise seulement aux objets connectés pouvant établir une connexion directe avec le dispositif 100 informatique. En effet, l'émission d'une telle requête aux objets connectés 14 positionnés derrière un pare-feu 15 n'est pas utile.

Le procédé selon l'invention peut également comporter une **étape d'émission d'une requête auprès d'un serveur de dépôt 20** configuré pour stocker des messages de statut d'objets connectés appartenant au parc 10 d'objets connectés. En effet, l'accès à certains objets connectés depuis le réseau peut être limité. Cela peut être causé par le positionnement de l'objet connecté 14 derrière un routeur comportant une adresse IP publique unique pour les échanges sur le réseau, par une connexion discontinue au réseau ou bien par l'utilisation d'un pare-feu 15 configuré pour limiter les accès extérieurs. Dans ce cas, une étape de requête d'un message de statut auprès de l'objet connecté ne permettra pas d'obtenir le message de statut souhaité. Ainsi, l'invention comporte avantageusement l'utilisation d'un serveur de dépôt pouvant stoker les messages de statut d'objets.

Avantageusement, pour des objets connectés utilisant le serveur de dépôt, le procédé comporte également une étape de configuration des objets connectés 14 du parc 10 d'objets connectés sous surveillance, de façon à configurer les objets connectés 14 pour qu'ils déposent un message de statut de manière automatisée et autonome sur un serveur de dépôt 20. Ainsi, le dispositif 100 informatique selon l'invention sera à même d'acquérir le message de statut sans que cet envoi ait été sollicité par le dispositif 100 informatique. En outre, le procédé selon l'invention comporte alors une étape d'envoi d'un message de statut par un objet connecté 14 sur un serveur de dépôt 20. Les objets connectés accessible via des requêtes par exemple des requêtes http disposent avantageusement d'un dispositif de génération et de diffusion du message de statut.

Comme cela est présenté dans **la** **figure 1****,** le procédé de planification selon l'invention comprend une **étape 240 d'acquisition d'un message de statut émis par un objet connecté 11.** Cette étape peut être réalisée partiellement ou complètement par **un module de communication 140** qui sera présenté par la suite.

L'objet connecté 11 ayant émis le message de statut acquis est avantageusement inscrit dans un référentiel objets 110. Par exemple, le référentiel objets 110 peut comporter une identification unique de chaque objet connecté tel que le numéro de série de l'objet connecté ou son adresse MAC. C'est particulièrement utile dans le cas de plusieurs objets se trouvant derrière un dispositif de pare-feu et n'ayant donc pas d'adresse IP Publique pouvant servir d'identification.

Cette étape peut permettre l'obtention d'une multitude de message de statut provenant d'objets connectés très divers. En effet, un des avantages de l'invention est de pouvoir agréger la surveillance de nombreux objets connectés n'ayant peu ou pas de points communs. Ainsi, il n'est pas nécessaire que les objets connectés aient été conçu par un même fabricant. De même, le procédé selon l'invention peut prendre en compte indifféremment des objets connectés présentant des versions logicielles anciennes ou des versions logicielles mises à jour.

Le procédé de planification selon l'invention comprend ensuite une **étape 250 d'extraction de valeurs de paramètres de statut** à partir dudit message de statut. Cette étape peut être réalisée partiellement ou complètement par **un module de traitement 150** qui sera présenté par la suite.

Lors de cette étape d'extraction, le module de traitement 150 pourra avantageusement, pour chaque objet connecté, extraire les valeurs de paramètres de statut en fonction d'un paramètre de vérification des messages de statut stocké dans le référentiel 110 objets. En effet, ce paramètre de vérification permet de définir, pour chaque objet connecté, le format à utiliser pour extraire les paramètres de statut des messages de statut provenant dudit objet connecté.

Etant donné que l'invention est applicable à une grande diversité d'objets connectés, les paramètres de statut peuvent être très diverses en fonction des objets connectés concernés. Ces paramètres vont être essentiellement dépendants du contenu du message de statut qui a été décidé par le constructeur de l'objet connecté. En effet, les paramètres de statut dont les valeurs extraites ne pourront aller au-delà des données présentes dans le message de statut. Par exemple, les paramètres de statut dont les valeurs ont été extraites peuvent être sélectionnés parmi : état de fonctionnement de l'objet, version logicielle, version hardware, espace disque disponible, jours de fonctionnement, état de la batterie, date d'émission du message de statut et état de fonctionnement de modules de l'objet (e.g. module d'acquisition d'image).

Les valeurs de paramètres extraites peuvent également être très diverses. Elles peuvent être par exemple sélectionnées parmi des valeurs alphabétiques (e.g. une ou plusieurs lettres et/ou caractères), des valeurs numériques (e.g. un ou plusieurs chiffres) ou des valeurs alphanumériques.

Lors de l'étape d'extraction, le message de statut pourra par exemple être analysé (e.g. parsé) de façon à extraire seulement les valeurs de paramètres en surveillance.

Avantageusement, lors de cette étape d'extraction 250, les valeurs d'au moins trois paramètres de statut sont extraites à partir dudit message de statut, de préférence d'au moins cinq et de façon encore plus préférée au moins sept.

L'étape d'extraction 250 peut également être accompagnée d'une étape de vérification du message de statut permettant, sur la base d'un formalisme définit préalablement, de contrôler que le message soit cohérent et complet.

Le procédé de planification selon l'invention comprend ensuite une **étape 260 de** comparaison des valeurs de paramètres de statut à des valeurs de seuils prédéterminés d'alerte. Cette étape peut être réalisée partiellement ou complétement par **un module de vérification 160** qui sera présenté par la suite.

Cette étape permet de comparer, pour chaque paramètre de statut, la valeur de paramètre extraite à une ou plusieurs valeurs de seuils prédéterminés d'alerte. La comparaison à deux valeurs de seuils permet notamment de comparer la valeur de paramètre extraire à une plage de valeurs acceptables.

Ainsi, cette étape permet de vérifier, pour chaque objet connecté, si les valeurs de paramètre extraites respectent une valeur autorisée ou une plage de valeurs autorisées.

Si une des valeurs extraites correspond à ou franchit un seuil prédéterminé d'alerte alors le procédé de planification selon l'invention comprend une **étape 270 de génération d'un message d'alerte en fonction du résultat de ladite comparaison réalisée à l'étape 260.** Cette étape peut être réalisée partiellement ou complètement par **un module d'alerte 160** qui sera présenté par la suite.

En outre, le procédé peut comprendre une étape de génération d'alertes basée sur un calcul booléen sur les valeurs d'un ou plusieurs paramètres ou sur un ou plusieurs messages d'alerte. Par exemple, dans le cas d'un panneau solaire, si un message d'alerte de température est envoyé ainsi qu'une alerte de débit ou une alerte de valeur de tension sur le moteur, alors un troisième message d'alerte est généré avec une importance supérieure.

Les messages d'alertes peuvent être transmis par différentes voies et peuvent être par exemple des courriels, des messages applicatifs ou encore des SMS ou MMS. Les informations nécessaires à l'envoi de ces messages d'alertes peuvent par exemple être contenues dans le référentiel objets 110. En outre, le procédé selon l'invention peut déclencher des actions telles que le l'arrêt ou le redémarrage de l'objet connecté. Ces actions sont réalisées par l'intermédiaire de l'exécution d'une instruction ou d'une série d'instructions prédéfinies.

Le procédé peut également **comprendre une étape de génération d'une valeur d'état de fonctionnement de l'objet connecté, ladite valeur d'état de fonctionnement étant basée sur les valeurs de paramètres de statut et les valeurs de seuil prédéterminé d'alerte.**

Lors de cette étape, une valeur d'état de fonctionnement d'état de fonctionnement peut être donnée en fonction par exemple du nombre de seuils prédéterminé ayant été dépassé par l'objet connecté et/ du nombre de messages d'alerte envoyés.

Avantageusement, la valeur d'état de fonctionnement peut aussi être basée sur une valeur de criticité des paramètres de statut. En effet, le dépassement des seuils prédéterminés d'alerte peuvent avoir une importance différente en fonction du paramètre de statut considéré. Ainsi, l'utilisation en outre d'une valeur de criticité des paramètres de statut permet de pondérer les dépassements de seuils.

Le procédé selon l'invention peut également comprendre une étape de stockage sur une mémoire des alertes générées lors d'inaccessibilité d'un objet connecté, des valeurs de paramètres extraites, des messages d'alerte envoyés et/ou des valeurs d'état de fonctionnement.

**Avantageusement, les étapes du procédé selon l'invention sont répétées pour tous les objets connectés listés dans le référentiel objets 110. Ainsi, le procédé est capable de faire une itération** sur tous les objets connectés référencés dans le référentiel objets 110 avec un format prédéterminé. Pour tous les objets connectés, il y a par exemple vérification si un message de statut est disponible sur un serveur de dépôt 20 si l'objet connecté n'est pas joignable directement ou bien contacte de l'objet connecté pour récupérer son message de statut, puis traitement du message de statut avec vérification des valeurs extraites par rapport aux seuils prédéterminés et exécution de la ou des actions associées si nécessaire.

En outre, le procédé peut être répété à une fréquence qui peut être prédéfinie par un administrateur, comme par exemple toutes les 24 heures. En outre, cette fréquence peut-être variable aussi selon le type d'objet connecté considéré. Ainsi, avantageusement, le référentiel objet peut comporter un paramètre de fréquence de mise à jour du statut qui pourra être variable en fonction des objets connectés considérés.

Lorsque le procédé a été mis en œuvre sur tous les objets connectés du référentiel objets 110, le procédé peut comporter une étape de génération 280 **d'un rapport comportant les valeurs d'état de fonctionnement de tous les objets connectés listés dans le référentiel objets.**

La génération de ce rapport peut inclure une classification ou une hiérarchisation des objets connectés en fonction de leur valeur d'état de fonctionnement. En outre, le rapport peut par exemple lister tous les objets connectés avec couleur verte pour les objets connectés respectant toutes les conditions et un dégradé d'orange à rouge si une ou plusieurs conditions ne sont pas respectées. Le rapport peut également représenter une jauge tous les objets connectés représentant la valeur d'état de fonctionnement.

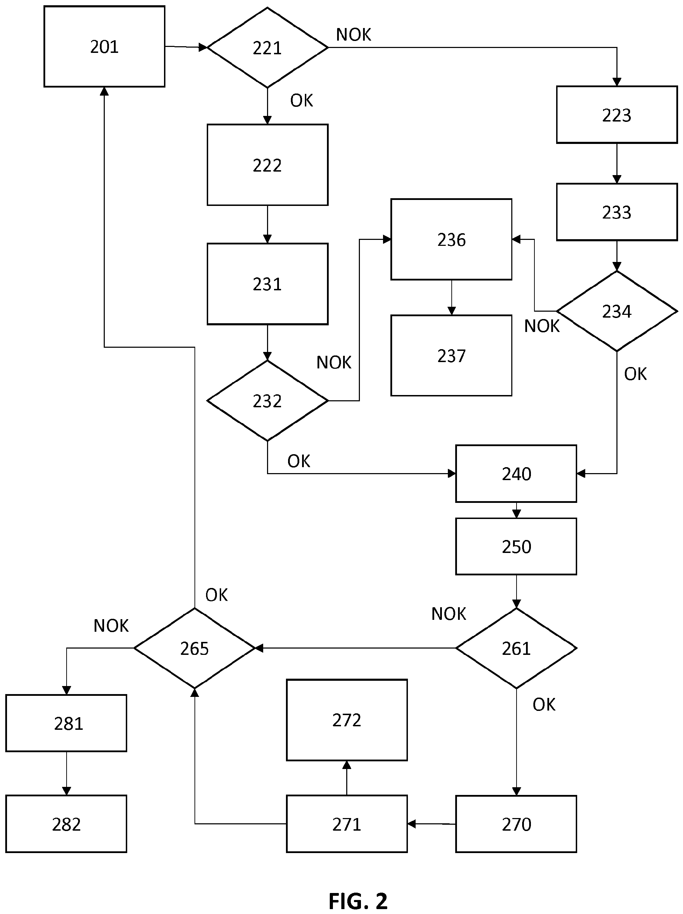

La figure 2 représente un mode de réalisation particulier de procédé de surveillance selon l'invention destiné à gérer la maintenance de panneaux solaires connectés construits par une pluralité de constructeur et présentant donc des modalités de communications différentes mais gérés par un même administrateur.

Le procédé commence par la sélection 201 d'un objet connecté dont il va évaluer le statut. Ensuite, il s'agit de déterminer lors d'une étape 221 si une connexion directe à l'objet connecté est possible. Cette étape 221 est avantageusement basée sur l'étude des données du référentiel objets 110 qui ont été préalablement chargées.

Si oui (OK), un format de requête adéquate est sélectionné 222 puis une requête de message de statut est envoyée 231 à l'objet connecté. Ensuite, le procédé vérifie 232 si une réponse est reçue. Si non (NOK), il y a génération d'un message 236 d'alerte et d'un rapport 237 d'alerte. Si oui (OK), le message de statut fait l'objet d'une étape d'acquisition 240 puis d'extraction 250 des valeurs de paramètre de statut.

Si l'objet est considéré comme non accessible lors de l'étape de détermination 221, un format de requête adéquate est sélectionné 223 puis une requête de message de statut est envoyée 233 à un serveur de dépôt de message 20. Ensuite, le procédé vérifie 234 si un message de statut est accessible. Si non (NOK), il y a génération d'un message 236 d'alerte et d'un rapport 237 d'alerte. Par exemple, un message est affiché dans une interface graphique. Si oui (OK), le message de statut fait l'objet d'une étape d'acquisition 240 puis d'extraction 250 des valeurs de paramètre de statut.

Une fois les valeurs de paramètres de statut extraites, il s'agit de déterminer si un seuil prédéterminé d'alerte est dépassé. Si oui (OK), alors il y a génération d'une alerte 270, éventuellement d'une action complémentaire 271 par exemple d'arrêt du panneau solaire et d'un rapport 272 sur l'alerte et les actions entreprises. Si aucun seuil prédéterminé n'est dépassé (NOK), le procédé détermine 265 si d'autres objets connectés sont à traiter. Si oui (OK) alors le procédé réitéré à partir de l'étape de sélection 201 de l'objet connecté à surveiller.

Une fois l'ensemble des objets connectés traités, le procédé peut comprendre une étape 281 de calcul d'une valeur d'état de fonctionnement pour chacun des objets connectés puis l'établissement 282 d'un rapport sur le statut des objets connectés sous surveillance.

Selon un autre aspect, l'invention porte sur un **dispositif 100 informatique de surveillance d'objet connecté apte à mettre en œuvre le procédé selon l'invention.**

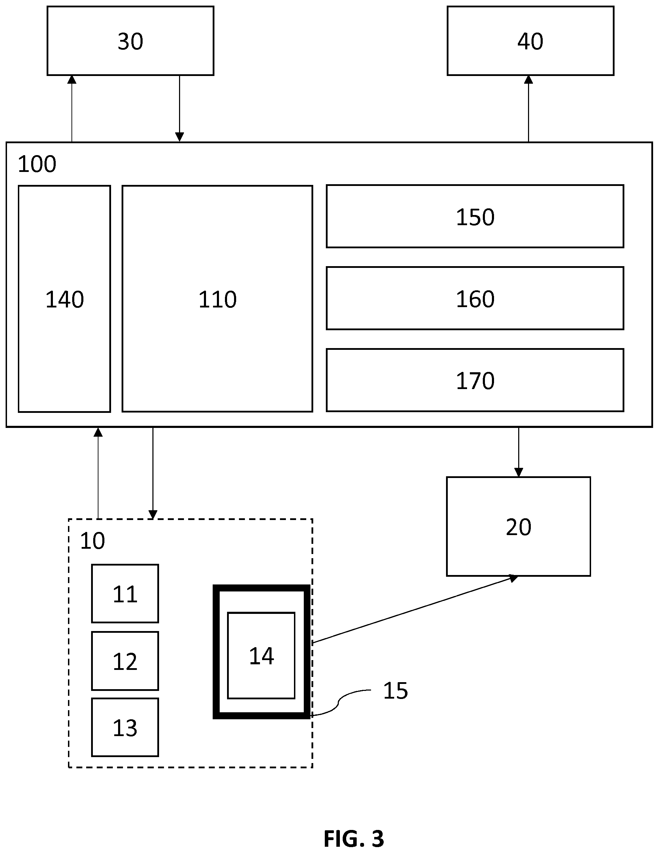

Plus particulièrement, le dispositif 100 informatique comporte un référentiel objets 110 configuré pour lister les objets connectés 11,12,13,14à surveiller, un module de communication 140, un module de traitement 150 de message et un module de vérification 160. Un tel dispositif, configuré pour reconnaitre la réponse formatée de façon structurée du message de statut d'objet connecté et d'en extraire les informations adéquates, est illustré à la **figure 3****.**

Le dispositif 100 informatique est avantageusement un serveur. Sur la figure 3 est affiché un terminal administrateur 30 via lequel, un utilisateur peut interagir, par exemple par l'intermédiaire d'un réseau de communication, avec le dispositif 100 selon l'invention. Le terminal administrateur 30 est un ordinateur, une tablette numérique, un téléphone portable, ou plus généralement tout dispositif permettant à un utilisateur d'émettre des requêtes, via un réseau de communication (par exemple LAN, WLAN, ou PAN, journal d'une base de données, courriel), vers le dispositif 100 de recherche de marge d'optimisation. A cet égard, le terminal terminal administrateur 30 peut être pourvu d'une application cliente permettant d'envoyer des requêtes ou des instructions au dispositif 100 de surveillance et d'en interpréter les réponses. Cette application cliente est, par exemple, un navigateur Web FireFox ®, Fennec ®, Opéra ®, Opéra Mobile ®, Internet Explorer®, Google Chrome® par exemple), ou un navigateur ftp (tel que FileZilla®). En outre, le dispositif 100 est apte à se connecter à un parc 10 d'objets connectés, à un serveur de dépôt de message 20 et à un client tiers 40.

Le **référentiel objets 110** est avantageusement établi au préalable par l'utilisateur du dispositif 100 informatique de surveillance et fourni au dispositif 100 les données nécessaires à sa versatilité.

Le référentiel objets 110 est avantageusement configuré pour enregistrer et donner accès à des données de :
- paramétrage de l'accès aux objets : avec des paramètres d'accessibilité de l'objet connecté, des paramètres de communication avec l'objet connecté, et des paramètres relatifs à la fréquence d'accès ;
- paramétrage de traitement des messages de statut : avec des paramètres de vérification des messages de statut, des valeurs de seuils prédéterminés d'alerte et des valeurs de criticité de paramètres de statut ; et
- paramétrage des actions : des paramètres d'actions en fonction de dépassement des seuils prédéterminés d'alerte.

Le référentiel objets 110 peut être construit via une interface homme machine, par exemple manuellement par l'utilisateur ou généré à partir d'une interface graphique appropriée, apte à permettre la saisie de paramètres de configuration. Par exemple, l'utilisateur du dispositif 100 de surveillance spécifie dans le référentiel objets 110 : des paramètres d'accessibilité de l'objet connecté, des paramètres de communication avec l'objet connecté, des paramètres de vérification des messages de statut, des valeurs de seuils prédéterminés d'alerte, des valeurs de criticité de paramètres de statut, et/ou des paramètres d'actions en fonction de dépassement des seuils prédéterminés d'alerte. En outre, le référentiel objets 110 comporte un identifiant unique pour chaque objet connecté 11,12,13,14 du parc 10 d'objets connectés sous surveillance. Cet identifiant unique peut par exemple correspondre au numéro de série de l'objet connecté ou bien à son adresse MAC (« Media Access Control » en terminologie anglo-saxonne).

Le **module de communication 140** permet pour une communication entre le dispositif et le parc d'objets connectés sous surveillance. Il est configuré pour acquérir un message de statut émis par un objet connecté, ledit objet connecté étant inscrit dans le référentiel objets 110.

En outre, le module de communication 140 est configuré pour recevoir et transmettre des informations à des systèmes distants tels que des objets connectés mais aussi des tablettes, des téléphones, des ordinateurs ou des serveurs. Le module de communication 140 permet de transmettre les données sur au moins un réseau de communication et peut comprendre une communication filaire ou sans fil. L'interaction peut impliquer un logiciel applicatif utilisé par l'administrateur pour interagir avec le dispositif selon l'invention. Le logiciel applicatif peut comporter une interface graphique permettant de faciliter une interaction avec un administrateur. Un administrateur peut alors agir sur le terminal distant de façon à générer une instruction apte à être mise en œuvre par le dispositif 1. Pour cela, le dispositif 100 selon l'invention peut comporter en outre un module d'interface homme-machine (IHM).

Le **module de traitement 150 de message** est configuré pour extraire des valeurs de paramètres de statut à partir dudit message de statut. Grace à cela, il peut reconnaitre la réponse formatée de façon structurée du message statut de l'objet connecté et d'en extraire les informations adéquates.

Le **module de vérification 160 de message** est configuré pour comparer des valeurs de paramètres de statut à des valeurs de seuils prédéterminés d'alerte. Grace à cela, il peut relier une ou plusieurs variables contenues dans cette réponse à leur valeur prédéfinie telle qu'enregistrée dans le référentiel objets 110. Il peut alors comparer la ou les valeurs reçues à une plage de valeurs acceptables et ainsi surveiller les valeurs fournies par les objets connectés. Ainsi, dans un mode de réalisation, le module de vérification 160 compare les informations qui lui sont retournées avec des informations prédéterminées, et peut en fonction du résultat de cette comparaison, détecter une ou plusieurs erreurs au niveau d'un objet connecté.

Le **module d'alerte 170 de message** est configuré pour générer un message d'alerte en fonction de la comparaison réalisée par le module de vérification 160. Il peut également être configuré pour réaliser des actions complémentaires à la génération d'alertes telles que des arrêts ou redémarrages de l'objet connecté.

Lorsque l'on prête une action au dispositif selon l'invention celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsque le dispositif selon l'invention émet ou reçoit un message, ce message est émis ou reçu par une interface de communication du dispositif. En outre, ces différents unités ou modules sont distincts sur la figure 3 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique. Les mémoires évoquées dans cette invention peuvent correspondre à une mémoire vive et/ou une mémoire de masse. La mémoire de masse peut- être un support tel qu'une carte mémoire, ou un disque dur hébergé par un serveur distant.

Avantageusement, l'ensemble des modes de réalisations décrits ci-dessus permettent d'assurer une surveillance autonome et automatique d'une pluralité d'objets connectés et ce quel que soit le constructeur de ces objets connectés. Ceci est rendu possible notamment grâce à l'utilisation du référentiel objets capable de comporter des données d'extraction des valeurs pour tous les types d'objet connectés appartement au parc d'objets connecté sous surveillance. En outre, l'invention permet également de surveiller des objets connectés positionnés derrière des pare-feu grâce notamment à l'utilisation d'un serveur de dépôt de messages.

## Revendications

1. Procédé (200) pour la surveillance d'objets connectés (11,12,13,14) appartenant à un parc (10) d'objets connectés sous surveillance, ledit procédé s'exécutant sur un dispositif (100) informatique comportant un référentiel objets (110) configuré pour lister les objets connectés (11,12,13,14) à surveiller, un module de communication (140), un module de traitement (150) de message, un module de vérification (160) et un module d'alerte (170), ledit procédé comportant les étapes suivantes :
- une étape préalable (210) de configuration du référentiel objets (110), ladite étape préalable de configuration (210) comportant l'enregistrement pour chacun des objets connectés listés dans ledit référentiel objets (110) d'un paramètre d'objet correspondant à un paramètre de vérification des messages de statut
- Acquisition (240), par le module de communication (140), d'un message de statut émis par un objet connecté (11), ledit objet connecté (11) étant inscrit dans le référentiel objets (110),
- Extraction (250), par le module de traitement (150), de valeurs de paramètres de statut à partir dudit message de statut, lesdites valeurs de paramètres de statut ainsi extraites étant fonction dudit paramètre de vérification des messages de statut,
- Comparaison (260), par le module de vérification (160), des valeurs de paramètres de statut à des valeurs de seuils prédéterminés d'alerte, et
- Génération (270), par le module d'alerte (170), d'un message d'alerte en fonction du résultat de ladite comparaison réalisée.

2. Procédé selon la revendication 1, caractérisé en ce l'étape préalable (210) de configuration du référentiel objets (110) comportant l'enregistrement sur ledit référentiel objets (110), d'au moins l'un des paramètres d'objet suivants :
- Paramètre de fréquence de mise à jour du statut,
- Paramètre d'accessibilité de l'objet connecté,
- Paramètre de communication avec l'objet connecté,
- des valeurs de seuils prédéterminés d'alerte,
- des valeurs de criticité de paramètres de statut, et/ou
- Paramètre d'actions en fonction de dépassement des seuils prédéterminés d'alerte

3. Procédé selon la revendication 1, **caractérisé en ce que** lors de l'étape d'extraction (250), les valeurs de paramètres de statut sont extraites en fonction dudit paramètre de vérification des messages de statut.

4. Procédé selon l'une quelconque des revendications 1 à 3, **caractérisé en ce qu'**il comprend en outre une étape préalable d'émission (230) d'une requête, ladite requête comportant une instruction de requête du statut de l'objet connecté (11) et ladite requête étant émise auprès des objets connectés appartenant au parc d'objets connectés.

5. Procédé selon l'une quelconque des revendications 1 à 4, **caractérisé en ce que** l'acquisition se fait auprès d'un serveur de dépôt (20) auquel l'objet connecté (11,12,13,14) a envoyé un message de statut.

6. Procédé selon l'une quelconque des revendications 1 à 5, **caractérisé en ce que** lors de l'étape d'extraction (250), les valeurs d'au moins trois paramètres de statut sont extraites à partir dudit message de statut.

7. Procédé selon l'une quelconque des revendications 1 à 6, **caractérisé en ce que** les paramètres de statut dont les valeurs extraites sont sélectionnés parmi : état de fonctionnement de l'objet, version logicielle, version hardware, espace disque disponible, jours de fonctionnement, état de la batterie, date d'émission du message de statut et état de fonctionnement de modules de l'objet (e.g. module d'acquisition d'image).

8. Procédé selon l'une quelconque des revendications 1 à 7, **caractérisé en ce qu'**il comprend en outre une étape de génération d'une valeur d'état de fonctionnement de l'objet connecté, ladite valeur d'état de fonctionnement étant basée sur les valeurs extraites des paramètres de statut et les valeurs de seuil prédéterminé d'alerte.

9. Procédé selon la revendication 8, **caractérisé en ce que** la valeur d'état de fonctionnement de l'objet connecté est en outre basée sur des valeurs de criticité des paramètres de statut.

10. Procédé selon l'une quelconque des revendications 1 à 9, **caractérisé en ce que** les étapes sont répétées pour tous les objets connectés listés dans le référentiel objets.

11. Procédé selon l'une quelconque des revendications 7 à 10, **caractérisé en ce qu'**il comprend en outre la génération (280) d'un rapport comportant les valeurs d'état de fonctionnement de tous les objets connectés listés dans le référentiel (110) objets.

12. Dispositif (100) pour la surveillance d'objets connectés (11,12,13,14) appartenant à un parc (10) d'objets connectés sous surveillance, ledit dispositif comportant :
- un référentiel objets (110) configuré pour lister les objets connectés (11,12,13,14) à surveiller et enregistrer pour chacun des objets connectés listés, des paramètres de vérification des messages de statut,
- un module de communication (140) configuré acquérir un message de statut émis par un objet connecté, ledit objet connecté (11,12,13,14) étant inscrit dans le référentiel (110) objets,
- un module de traitement (150) de message, configuré pour extraire des valeurs de paramètres de statut à partir dudit message de statut en fonction d'un paramètre de vérification des messages de statut stocké dans le référentiel objets (110),
- un module de vérification (160), configuré pour comparer des valeurs de paramètres de statut à des valeurs de seuils prédéterminés d'alerte, et
- un module d'alerte, configuré pour générer un message d'alerte en fonction de ladite comparaison réalisée.

13. Produit programme d'ordinateur comportant des instructions de programme, qui, lorsqu'elles sont préalablement enregistrées dans une mémoire d'un dispositif de surveillance selon la revendication 12, provoquent la mise en œuvre d'un procédé (200) pour la surveillance d'objets connectés selon l'une quelconque des revendications 1 à 11.

14. Support de stockage tangible, lisible par le dispositif de surveillance selon la revendication 12, sur lequel est stocké de manière non-transitoire un produit programme d'ordinateur selon la revendication 13.

## Patentansprüche

1. Verfahren (200) zum Überwachen verbundener Objekte (11, 12, 13, 14), die zu einem Park (10) verbundener, überwachter Objekte gehören, wobei genanntes Verfahren auf einer Computervorrichtung (100) ausgeführt wird, die ein Objektregister (110), das konfiguriert ist, um die zu überwachenden, verbundenen Objekte (11, 12, 13, 14) aufzulisten, ein Kommunikationsmodul (140), ein Meldungsverarbeitungsmodul (150), ein Überwachungsmodul (160) und ein Warnmodul (170) umfasst, wobei das Verfahren folgende Schritte umfasst:
- einen vorangehenden Schritt (210) des Konfigurierens des Objektregisters (110), wobei der vorangehende Konfigurationsschritt (210) das Aufzeichnen eines Objektparameters, der einem Überprüfungsparameter der Statusmeldungen entspricht, für jedes der verbundenen Objekte umfasst, die in dem Objektregister (110) aufgelistet sind
- Erfassen (240) einer von einem verbundenen Objekt (11) gesendeten Statusmeldung durch das Kommunikationsmodul (140), wobei das verbundene Objekt (11) in dem Objektregister (110) eingetragen ist,
- Extrahieren (250) von Statusparameterwerten aus der genannten Statusmeldung durch das Verarbeitungsmodul (150), wobei die genannten, so extrahierten Statusparameterwerte eine Funktion des genannten Überwachungsparameters der Statusmeldung sind,
- Vergleichen (260) der Statusparameterwerte durch das Überwachungsmodul (160) mit den Werten vorbestimmter Warnschwellen und
- Generieren (270) einer Warnmeldung durch das Warnmodul (170) in Abhängigkeit vom Ergebnis des durchgeführten Vergleichs.

2. Verfahren nach Anspruch 1, **dadurch gekennzeichnet, dass** der vorangehende Schritt (210) des Konfigurierens des Objektregisters (110) das Aufzeichnen von mindestens einem der folgenden Objektparameter in dem genannten Objektregister (110) umfasst:
- Parameter der Häufigkeit der Statusaktualisierung,
- Parameter der Zugänglichkeit des verbundenen Objekts,
- Parameter der Kommunikation mit dem verbundenen Objekt,
- vorgegebene Warnschwellenwerte,
- Kritikalitätswerte von Statusparametern und/oder
- Parameter von Aktionen basierend auf einer Überschreitung vorgegebener Warnschwellen.

3. Verfahren nach Anspruch 1, **dadurch gekennzeichnet, dass** während des Extraktionsschritts (250) die Statusparameterwerte in Abhängigkeit vom genannten Überwachungsparameter der Statusmeldung extrahiert werden.

4. Verfahren nach einem der Ansprüche 1 bis 3, **dadurch gekennzeichnet, dass** es ferner einen vorangehenden Schritt des Sendens (230) einer Anforderung umfasst, wobei die Anforderung eine Anforderungsanweisung für den Status des verbundenen Objekts (11) umfasst und genannte Anforderung an die verbundenen Objekte, die zum Park der verbundenen Objekte gehören, gesendet wird.

5. Verfahren nach einem der Ansprüche 1 bis 4, **dadurch gekennzeichnet, dass** die Erfassung bei einem Hinterlegungsserver (20) erfolgt, an den das verbundene Objekt (11, 12, 13, 14) eine Statusmeldung gesendet hat.

6. Verfahren nach einem der Ansprüche 1 bis 5, **dadurch gekennzeichnet, dass** während des Extraktionsschritts (250) die Werte von mindestens drei Statusparametern aus der Statusmeldung extrahiert werden.

7. Verfahren nach einem der Ansprüche 1 bis 6, **dadurch gekennzeichnet, dass** die Statusparameter, deren Werte extrahiert werden, ausgewählt sind aus: Betriebszustand des Objekts, Softwareversion, Hardwareversion, verfügbarer Speicherplatz, Betriebstage, Batteriezustand, Sendedatum der Statusmeldung und Betriebszustand von Objektmodulen (z. B. Bildaufnahmemodul).

8. Verfahren nach einem der Ansprüche 1 bis 7, **dadurch gekennzeichnet, dass** es ferner einen Schritt zum Erzeugen eines Betriebszustandswerts des verbundenen Objekts umfasst, wobei der Betriebszustandswert auf Werten basiert, die aus Statusparametern und vorbestimmten Warnschwellenwerten extrahiert werden.

9. Verfahren nach Anspruch 8, **dadurch gekennzeichnet, dass** der Betriebszustandswert des verbundenen Objekts ferner auf Kritikalitätswerten der Statusparameter basiert.

10. Verfahren nach einem der Ansprüche 1 bis 9, **dadurch gekennzeichnet, dass** die Schritte für alle im Objektregister aufgelisteten, verbundenen Objekte wiederholt werden.

11. Verfahren nach einem der Ansprüche 7 bis 10, **dadurch gekennzeichnet, dass** es ferner das Erzeugen (280) eines Berichts umfasst, der die Betriebszustandswerte aller verbundenen Objekte umfasst, die in dem Objektregister (110) aufgelistet sind.

12. Vorrichtung (100) zum Überwachen verbundener Objekte (11, 12, 13, 14), die zu einem Park (10) verbundener, überwachter Objekte gehören, wobei genannte Vorrichtung umfasst:
- ein Objektregister (110), das konfiguriert ist, um die zu überwachenden, verbundenen Objekte (11, 12, 13, 14) aufzulisten und für jedes der aufgelisteten, verbundenen Objekte Überprüfungsparameter der Statusmeldungen aufzuzeichnen,
- ein Kommunikationsmodul (140), das konfiguriert ist, um eine Statusmeldung zu erlangen, die von einem verbundenen Objekt gesendet wird, wobei genanntes verbundenes Objekt (11, 12, 13, 14) in dem Objektregister (110) eingetragen ist,
- ein Meldungsverarbeitungsmodul (150), das konfiguriert ist, um Statusparameterwerte aus der Statusmeldung in Abhängigkeit eines im Objektregister (110) gespeicherten Überwachungsparameter der Statusmeldung zu extrahieren,
- ein Überwachungsmodul (160), das konfiguriert ist, um Statusparameterwerte mit vorbestimmten Warnschwellenwerten zu vergleichen, und
- ein Warnmodul, das konfiguriert ist, um eine Warnmeldung in Abhängigkeit von dem durchgeführten Vergleich zu erzeugen.

13. Computerprogrammprodukt mit Programmanweisungen, die, wenn sie zuvor in einem Speicher einer Überwachungsvorrichtung nach Anspruch 12 aufgezeichnet werden, die Implementierung eines Verfahrens (200) zur Überwachung verbundener Objekte nach einem der Ansprüche 1 bis 11 bewirken.

14. Greifbares Speichermedium, das von der Überwachungsvorrichtung nach Anspruch 12 gelesen werden kann, auf dem ein Computerprogrammprodukt nach Anspruch 13 auf nicht flüchtige Weise gespeichert ist.

## Claims

1. A method (200) for monitoring connected objects (11, 12, 13, 14) belonging to a fleet (10) of connected objects to be monitored, said method being run on a computer device (100) comprising an object repository (110) configured to list the connected objects (11, 12, 13, 14) to be monitored, a communication module (140), a message processing module (150), a verification module (160) and an alert module (170), said method comprising the following steps:
- a preliminary step (210) of configuring the object repository (110), said preliminary configuration step (210) comprising the recording, for each of the connected objects listed in said object repository (110), of an object parameter corresponding to a status message verification parameter,
- acquisition (240), by the communication module (140), of a status message sent by a connected object (11), said connected object (11) being registered in the object repository (110),
- extraction (250), by the processing module (150), of status parameter values from said status message, said status parameter values thus extracted being based on said status message verification parameter,
- comparison (260), by the verification module (160), of the status parameter values with the values of predetermined alert thresholds, and
- generation (270), by the alert module (170), of an alert message depending on the result of said comparison.

2. The method according to claim 1, **characterized in that** the prior step (210) of configuring the object repository (110) comprises the recording in said object repository (110) of at least one of the following object parameters:
- status update frequency parameter,
- connected object accessibility parameter,
- parameter for communication with the connected object,
- predetermined alert threshold values,
- status parameter criticality values, and/or
- parameter of actions based on exceeding predetermined alert thresholds.

3. The method according to claim 1, **characterized in that** during the extraction step (250), the status parameter values are extracted based on said status message verification parameter.

4. The method according to any one of claims 1 to 3, **characterized in that** it further comprises a prior step of sending (230) a request, said request comprising a request instruction for the status of the connected object (11) and said request being sent to the connected objects belonging to the fleet of connected objects.

5. The method according to any one of claims 1 to 4, **characterized in that** the acquisition is made from a deposit server (20) to which the connected object (11, 12, 13, 14) has sent a status message.

6. The method according to any one of claims 1 to 5, **characterized in that** during the extraction step (250), the values of at least three status parameters are extracted from said status message.

7. The method according to any one of claims 1 to 6, **characterized in that** the status parameters whose values extracted are selected from: operating state of the object, software version, hardware version, available disk space, days of operation, battery state, date of issue of the status message and operating state of object modules (e.g. image acquisition module).

8. The method according to any one of claims 1 to 7, **characterized in that** it further comprises a step of generating an operating state value of the connected object, said operating state value being based on values extracted from status parameters and predetermined alert threshold values.

9. The method according to claim 8, **characterized in that** the operating state value of the connected object is further based on criticality values of the status parameters.

10. The method according to any one of claims 1 to 9, **characterized in that** the steps are repeated for all the connected objects listed in the object repository.

11. The method according to any one of claims 7 to 10, **characterized in that** it further comprises the generation (280) of a report comprising the operating state values of all the connected objects listed in the object repository (110).

12. A device (100) for monitoring connected objects (11, 12, 13, 14) belonging to a fleet (10) of connected objects to be monitored, said device comprising:
- an object repository (110) configured to list the connected objects (11, 12, 13, 14) to be monitored and record, for each of the connected objects listed, parameters for verifying the status messages,
- a communication module (140) configured to acquire a status message sent by a connected object, said connected object (11, 12, 13, 14) being registered in the object repository (110),
- a message processing module (150), configured to extract status parameter values from said status message based on a status message verification parameter stored in the object repository (110),
- a verification module (160), configured to compare status parameter values to predetermined alert threshold values, and
- an alert module, configured to generate an alert message based on said comparison.

13. A computer program product comprising program instructions which, when previously recorded in a memory of a monitoring device according to claim 12, cause the implementation of a method (200) for monitoring connected objects according to any one of claims 1 to 11.

14. A tangible storage medium, readable by the monitoring device according to claim 12, on which is stored non-transiently a computer program product according to claim 13.
